# EUROPÄISCHE PATENTANMELDUNG

(11) **EP 3 156 443 A1**
(43) Veröffentlichungstag der Anmeldung: **19.04.2017**
(21) Anmeldenummer: 16188237.8
(22) Anmeldetag: 12.09.2016
(51) Int. Cl.: C08L 7/00, C08K 3/36, C08K 5/548

(54) **KAUTSCHUKMISCHUNG UND FAHRZEUGLUFTREIFEN**

(30) Priorität: 12.10.2015 DE 102015219662
(71) Anmelder: Continental Reifen Deutschland GmbH, 30165 Hannover (DE)
(72) Erfinder: Pavon Sierra, Viktoria, 30419 Hannover (DE); Müller, Norbert, 29336 Nienhagen (DE); Voiges, Kristin, 30175 Hannover (DE); Kendziorra, Norbert, 30827 Garbsen (DE); Weber, Christian, 30826 Garbsen (DE); Wehming-Bornkamp, Kathrin, 30161 Hannover (DE)
(74) Vertreter: Finger, Karsten

(57) **Zusammenfassung**

Die Erfindung betrifft eine schwefelvernetzbare Kautschukmischung, insbesondere für Laufstreifen von Fahrzeugluftreifen, und einen Fahrzeugluftreifen.

Die Kautschukmischung enthält
- wenigstens einen Dienkautschuk,
- 30 bis 250 phr zumindest einer ersten Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g und
- 6,5 bis 12,5 phf zumindest eines geblockten und/oder ungeblockten Mercaptosilans.

## Beschreibung

Die Erfindung betrifft eine schwefelvernetzbare Kautschukmischung, insbesondere für Laufstreifen von Fahrzeugluftreifen, und einen Fahrzeugluftreifen.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um die vorgenannten Zielkonflikte zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1 419 195 B1 sind z. B. Laufstreifenmischungen bekannt, die zur Verbesserung der Reifeneigenschaften Kieselsäuren mit einer niedrigen spezifischen Oberfläche (low surface area) enthalten. Die BET-Oberfläche dieser Kieselsäuren ist kleiner als 130 m²/g.

Ferner ist es bekannt, in kieselsäurehaltigen Mischungen zur Verbesserung der Verarbeitbarkeit und zur Anbindung des polaren Füllstoffes an den Kautschuk Silan-Kupplungsagenzien zuzusetzen. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Derartige Silan-Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden.

So genannte NXT^{®} Silane werden von der Firma Momentive, USA in Kombination mit Kieselsäuren mit hoher spezifischer Oberfläche und funktionalisierten Polymeren vorgeschlagen, um eine einfache Verarbeitbarkeit von Hochleistungsmischungen zu erzielen.

Der vorliegenden Erfindung liegt nun die Aufgabe zugrunde, eine schwefelvernetzbare Kautschukmischung bereitzustellen, die beim Einsatz als Laufstreifenmischung zu niedrigem Rollwiderstand bei gleichzeitig verbesserten Eiseigenschaften führt.

Gelöst wird diese Aufgabe durch eine schwefelvernetzbare Kautschukmischung, enthaltend
- wenigstens einen Dienkautschuk,
- 30 bis 250 phr zumindest einer ersten Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g und
- 6,5 bis 12,5 phf zumindest eines geblockten und/oder ungeblockten Mercaptosilans.

Überraschenderweise weist die erfindungsgemäße Kautschukmischung beim Einsatz im Reifen durch die Kombination der Bestandteile ein gutes Rollwiderstandsverhalten bei verbessertem Eisbremsen auf, so dass auf eisiger und verschneiter Fahrbahn kürzere Bremswege erzielt werden können. Gleichzeitig weisen Reifen mit einem Laufstreifen aus einer derartigen Mischung unerwarteter Weise auch ein verbessertes Trockenhandling auf.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure bzw. die vorhandenen Kieselsäuren, das heißt, dass andere eventuell vorhandene Füllstoffe wie Ruß nicht in die Berechnung der Mercaptosilanmenge mit eingehen.

Die erfindungsgemäße Kautschukmischung enthält wenigstens einen Dienkautschuk. Demnach können auch mehrere Kautschuke im Verschnitt eingesetzt werden.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei dem wenigstens einen Dienkautschuk handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder AcrylatKautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.
Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen vorzugsweise bei der Herstellung von technischen Gummiartikeln, wie Gurten, Riemen, Schläuchen und/oder Schuhsohlen zum Einsatz.

Bevorzugt handelt es sich bei dem oder den Dienkautschuk(en) jedoch um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk).

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisoprenen denkbar.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Butadien-Kautschuk (BR, Polybutadien) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das eingesetzte Polybutadien kann ebenfalls mit den oben beim Styrol-Butadien-Kautschuk genannten Modifizierungen und Funktionalisierungen endgruppenmodifiziert und/oder entlang der Polymerketten funktionalisiert sein.

Erfindungsgemäß enthält die Kautschukmischung 6,5 bis 12,5 phf, bevorzugt 8 bis 11 phf, zumindest eines geblockten und/oder ungeblockten Mercaptosilans.
Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind, wie unten ausgeführt, Acylgruppen.
Der Ausdruck "geblocktes und/oder ungeblocktes Mercaptosilan" bedeutet, dass sowohl ein geblocktes als auch ein ungeblocktes als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte und/oder ungeblockte Mercaptosilan die allgemeine Summenformel I) auf:

I) (R⁴)₃Si-Z-S-R⁵ ,

wobei die Reste R⁴ innerhalb eines Moleküls gleich oder verschieden voneinander sein können und Alkoxy-Gruppen mit 1 bis 10 Kohlenstoffatomen sind,
wobei R⁵ eine Acylgruppe mit 1 bis 20 Kohlenstoffatomen oder eine Wasserstoffatom ist, und
wobei Z eine Alkylgruppe mit 1 bis 10 Kohlenstoffatomen ist.

S ist die Abkürzung für Schwefel und Si für Silizium.

Geblockte Mercaptosilane tragen an dem Schwefelatom eine Schutzgruppe, in dem vorliegenden Fall in Formel I) die Gruppe R⁵, weshalb sie auch "geschützte Mercaptosilane" genannt werden.

Gemäß einer bevorzugten Ausführungsform der Erfindung handelt es sich bei dem Mercaptosilan um das geblockte Mercaptosilan 3-Octanoylthio-1-propyltriethoxysilan, womit in oben genannter Formel I) alle Reste R⁴ Ethoxy (OEt) sind, Z eine Propylgruppe und R⁵ eine Octanoylgruppe ist. Mit diesem Mercaptosilan konnten besonders gute Ergebnisse hinsichtlich des Verarbeitungsverhaltens und der Reifeneigenschaften erzielt werden.

Die Kautschukmischung enthält 30 bis 250 phr zumindest einer ersten Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g. Diese Kieselsäuren werden auf Grund ihrer geringen spezifischen Oberfläche auch als "low surface area" Kieselsäuren bezeichnet. Es können auch mehrere Kieselsäuren mit einer derartigen Oberflächencharakteristik im Gemisch eingesetzt werden. Die Begriffe "Kieselsäure" und "Silika" werden im Rahmen der vorliegenden Erfindung, wie in der Fachwelt üblich, synonym verwendet. Zum Einsatz können z. B. Zeosil^{®}1085 oder Zeosil^{®}1115 der Firma Solvay, Frankreich kommen.

Überraschenderweise wird durch das Zusammenspiel dieser "low surface area" Kieselsäure mit 6,5 bis 12,5 phf des geblockten und/oder ungeblockten Mercaptosilans in der Dienkautschukmischung die Wintereigenschaft "Eisbremsen" bei einem Reifen mit dieser Mischung als Laufstreifen deutlich verbessert. Auch hinsichtlich des Handlings auf trockener Fahrbahn wird eine Verbesserung erzielt, wobei der Rollwiderstand und andere Reifeneigenschaften auf gutem Niveau verbleiben.

Ein besonders ausgewogenes Verhältnis der gewünschten Reifeneigenschaften wird erzielt, wenn die Kautschukmischung 60 bis 180 phr der zumindest ersten Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g enthält. Auch das Verarbeitungsverhalten der Mischung ist bei diesen Mengen sehr gut.

Um die Reifeneigenschaften weiter zu verbessern, hat es sich als vorteilhaft erwiesen, wenn die erste Kieselsäure eine CTAB-Oberfläche (gemäß ASTM D 3765) von 70 bis 120 m²/g und eine Stickstoff-Oberfläche (BET-Oberfläche) (gemäß DIN ISO 9277 und DIN 66132) von 80 bis 125 m²/g aufweist.

Es hat sich herausgestellt, dass sich die Eigenschaften beim Trockenhandling weiter verbessern lassen, wenn die Kautschukmischung zumindest eine zweite Kieselsäure mit einer CTAB-Oberfläche (gemäß ASTM D 3765) von mehr als 130 m²/g und eine Stickstoff-Oberfläche (BET-Oberfläche) (gemäß DIN ISO 9277 und DIN 66132) von mehr als 140 m²/g enthält. Es wird also ein Gemisch von zumindest zwei Kieselsäuren eingesetzt, von denen die erste eine besonders niedrige spezifische Oberfläche und die zweite ein hohe spezifische Oberfläche aufweist. Bei der zweiten Kieselsäure kann es sich z. B. um Zeosil^{®}1165 der Firma Solvay, Frankreich handeln.

Gemäß einer vorteilhaften Weiterbildung der Erfindung enthält die Kautschukmischung 30 bis 125 phr der ersten und 10 bis 125 phr der zweiten Kieselsäure. So lassen sich Reifeneigenschaften, Produktivität und ökonomische Aspekte weiter optimieren.

Für gutes Trockenbremsen und Trockenhandling sind die erste und die zweite Kieselsäure vorzugsweise in einem Verhältnis von 1:2,5 bis 2,5:1 in der Kautschukmischung enthalten.

Neben den bereits ausführlich erläuterten, erfindungswesentlichen Bestandteilen, kann die Kautschukmischung weitere, in der Kautschukindustrie übliche Bestandteile enthalten. Derartige Bestandteile werden im Folgenden erläutert:

Die erfindungsgemäße Kautschukmischung kann andere im Stand der Technik bekannte Silane enthalten, wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik). Bevorzugt enthält sie jedoch außer dem Mercaptosilan kein weiteres Silan, d.h. sie ist bevorzugt frei von weiteren Silanen wie TESPD (3,3`-Bis(triethoxysilylpropyl)disulfid) oder TESPT (3,3'-Bis(triethoxysilylpropyl)tetrasulfid) oder Octyltriethoxysilane (z. B. Si208^{®}, Fa. Evonik).

Die Kautschukmischung kann als weiteren Füllstoff Ruß enthalten. Es sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Die erfindungsgemäße Kautschukmischung kann neben Kieselsäure und Ruß noch weitere bekannte polare und/oder unpolare Füllstoffe, wie Alumosilicate, Kreide, Stärke, Magnesiumoxid, Titandioxid oder Kautschukgele, enthalten. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar.
Auch Graphit und Graphene sowie sogenannte "carbon-silica dual-phase filler" sind als Füllstoff denkbar.
Zinkoxid gehört im Rahmen der vorliegenden Erfindung nicht zu den Füllstoffen.

In der Kautschukmischung können Weichmacher in Mengen von 1 bis 90 phr, bevorzugt von 5 bis 70 phr, besonders bevorzugt von 15 bis 60 phr, enthalten sein. Geringe Mengen an Weichmacher werden im Wesentlichen im Hinblick auf eine besonders gute Prozessierbarkeit der Kautschukmischung, insbesondere der Extrudate vor der Vernetzung, zugesetzt, während hohe Mengen an Weichmacher im PKW-Reifenbereich zur Einstellung der Mischungshärte dienen.

Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N`-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z. B. Fettsäuresalze, wie z. B. Zinkseifen, und
Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich auch 0,1 bis 10 phr, bevorzugt 1 bis 8 phr, besonders bevorzugt 1,5 bis 4 phr, Zinkoxid (ZnO).

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es können aber auch Zinkoxide mit einer BET-Oberfläche von 10 bis 100 m²/g, wie z. B. so genannte "nano-Zinkoxide", verwendet werden.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Kautschukmischung kann auch Haftsysteme wie z. B. Cobalt-Salze und Verstärkerhärze (z. B. Resorcin-HMMM/HMT) zum Einsatz in Body-Mischungen, insbesondere Gummierungsmischungen, enthalten.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, sowie die oben genannten Systeme Vulkuren^{®}, Duralink^{®} und Perkalink^{®} begrifflich als Vulkanisationsmittel zusammengefasst.

Der erfindungsgemäßen Kautschukmischung wird bei deren Herstellung bevorzugt wenigstens ein Vulkanisationsmittel ausgewählt aus der Gruppe enthaltend Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugluftreifen, herstellen.

Die Begriffe "vulkanisiert" und "vernetzt" werden im Rahmen der vorliegenden Erfindung synonym verwendet.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiartikel, wie Bälge, Förderbänder, Luftfedern, Gurte, Riemen, Schläuche oder Schuhsohlen eingesetzt werden.

Vorzugsweise findet die Kautschukmischung jedoch Anwendung in Fahrzeugreifen, wobei darunter Fahrzeugluftreifen und Vollgummireifen, inklusive Reifen für Industrie- und Baustellenfahrzeuge, LKW-, PKW- sowie Zweiradreifen zu verstehen sind.

Gemäß einer bevorzugten Ausgestaltung der Erfindung wird die Kautschukmischung als Bauteil eines Fahrzeugluftreifens eingesetzt.

Einen Fahrzeugluftreifen mit verbessertem Eisbremsen, gutem Trockenhandling und niedrigem Rollwiderstand erhält man, wenn der Laufstreifen die erfindungsgemäße Kautschukmischung aufweist. Handelt es sich bei dem Laufstreifen um einen mit einer Cap/Base-Konstruktion, weist vorzugsweise die Cap die erfindungsgemäße Mischung auf. Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap). Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laustreifenbase).

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Zur Verwendung als Laufstreifen in Fahrzeugluftreifen wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Erfindung soll nun anhand von Vergleichs- und Ausführungsbeispielen, die in den
Tabellen 1 und 2 zusammengefasst sind, näher erläutert werden.
Die Vergleichsmischungen sind dabei mit V, die erfindungsgemäßen Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde. Die Mischungen sind durch entsprechende Anpassung der Weichmacherdosierung härtegleich eingestellt.

Aus sämtlichen Mischungen wurden Prüfkörper durch Vulkanisation über 20 min unter Druck bei 160 °C hergestellt und mit diesen Prüfkörpern für die Kautschukindustrie übliche Materialeigenschaften mit den im Folgenden angegebenen Testverfahren ermittelt.
- Shore-A-Härte bei Raumtemperatur (RT gemäß DIN ISO 7619-1
- Rückprallelastizität (Rückpr.) bei Raumtemperatur und 70 °C gemäß DIN 53 512
- über die Dehnung gemittelter dynamischer Speichermodul E' bei 55 °C aus dynamisch-mechanischer Messung in Anlehnung an DIN 53 513 mit einem Dehnungsdurchlauf (engl. "strain sweep") bei einer Vorkompression von 20 % in einem Dehnungsbereich zwischen 0,15 % und 8% und einer Frequenz von 10 Hz

Ferner wurden Reifen der 205/55 R16 gebaut, deren Laufstreifen die Mischungen der Tabelle 1 aufwiesen, und mit diesen Reifen folgende Tests durchgeführt:
- Rollwiderstand: gemäß ISO 28580
- Nassbremsen: ABS-Bremsen aus 80 km/h, nasser Asphalt, niedriges (low)
- Schnee - Traktion: Beschleunigung auf Schnee und Bestimmung der Traktionskraft
- Eisbremsen: ABS-Bremsen bei einer Startgeschwindigkeit von 22 km/h auf polierter Eisoberfläche

Die ermittelten Werte wurden in Performance (Leistung) umgerechnet, wobei die Vergleichsmischungen V1, V3 und V5 bei jeder getesteten Eigenschaft auf 100 % Performance normiert wurden. Die Mischungen V2, V4 und E6 beziehen sich auf die entsprechenden Mischungen, die dieselbe Polymerzusammensetzung aufwiesen. Hierbei bedeuten Werte kleiner 100 % eine Verschlechterung in den Eigenschaften, während Werte größer 100 % eine Verbesserung darstellen.

**Tabelle 1**

| **Bestandteile** | **Einheit** | **1(V)** | **2(V)** | **3(V)** | **4(V)** | **5(V)** | **6(E)** |
|---|---|---|---|---|---|---|---|
| Naturkautschuk | phr | 37,5 | 37,5 | 10 | 10 | 15 | 15 |
| BR | phr | 42,5 | 42,5 | 12,5 | 12,5 | 20 | 20 |
| S-SBR^{a} | phr | 20 | 20 | 77,5 | 77,5 | 65 | 65 |
| Ruß N121 | phr | 8 | 8 | - | - | - | - |
| Ruß N339 | phr | - | - | 5 | 5 | 7 | 7 |
| Kieselsäure A^{b} | phr | 76 | - | - | - | - | - |
| Kieselsäure B^{c} | phr | - | 90 | - | - | - | 150 |
| Kieselsäure C^{d} | phr | - | - | 120 | 120 | 120 | |
| Weichmacher | phr | 69 | 57 | 50 | 33 | 67 | 77 |
| Silan-Kupplungsagens^{e} | phr | 6,2 | 4,9 | 8,6 | - | - | - |
| gebl. Mercaptosilan^{f} | phr | - | - | - | 14,64 | 12,2 | 9 |
| Alterungsschutzmittel | phr | 6,5 | 6,5 | 6,9 | 6,9 | 7,1 | 7,1 |
| Zinkoxid | phr | 3 | 3 | 2 | 2 | 2 | 2 |
| Stearinsäure | phr | 1,5 | 1,5 | 1 | 1 | 1 | 1 |
| Beschleuniger | phr | 5 | 5 | 4,5 | 4,5 | 9 | 9 |
| Schwefel | phr | 1,9 | 1,9 | 2,1 | 2,1 | 1,4 | 1,4 |

| **Eigenschaften** | | | | | | | |
|---|---|---|---|---|---|---|---|
| Shore A-Härte bei RT | ShoreA | 52 | 52 | 58 | 60 | 63 | 64 |
| Rückprallelast. bei RT | % | 32 | 36 | 24 | 30 | 34 | 33 |
| Rückprallelast. 70°C | % | 41,7 | 49,7 | 44 | 52 | 60 | 57 |

| **Reifeneigenschaften** | | | | | | | |
|---|---|---|---|---|---|---|---|
| Rollwiderstand | % | 100 | 100 | 100 | 107 | 100 | 98 |
| Nassbremsen | % | 100 | 103 | 100 | 99 | 100 | 106 |
| Schnee-Traktion | % | 100 | 99 | 100 | 99 | 100 | 101 |
| Eisbremsen | % | 100 | 96 | 100 | 95 | 100 | 105,5 |

| | | | | | | | |
|---|---|---|---|---|---|---|---|
| ^{a)} lösungspolymerisiertes Styrol-Butadien-Copolymer ^{b)} ZHRS® 1200 MP, CTAB 195 m²/g , BET 200 m²/g, Fa. Solvay ^{c)} Zeosil^{®} 1115 MP, CTAB 110 m²/g , BET 115 m²/g, Fa. Solvay ^{d)} Zeosil^{®} 1165 MP, CTAB 160 m²/g , BET 165 m²/g, Fa. Solvay ^{e)} S₂-Silan: TESPD ^{f)} geblocktes Mercaptosilan: 3-(Octanoylthio)-1-Propyl-Triethoxysilan, Fa. Momentive | | | | | | | |

In Tabelle 1 erfolgte der Austausch der Kieselsäuren "oberflächengleich". Aus der Tabelle 1 wird ersichtlich, dass nur die Kombination von einem Mercaptosilan mit einer Kieselsäure mit einer niedrigen spezifischen Oberfläche zu einem besonders guten Eisbremsverhalten führt (105,5 %). Dieser Effekt war keinesfalls aus den Einzelmaßnahmen zu erwarten, denn der alleinige Austausch einer Kieselsäure mit großer spezifischer Oberfläche (ZHRS® 1200 MP) gemäß Mischung 1(V) gegen eine Kieselsäure mit niedriger spezifischer Oberfläche (Zeosil^{®}1115 MP) gemäß Mischung 2(V) führt zu einer Verschlechterung des Eisbremsens. Den gleichen Effekt hat der alleinige Austausch eines S₂-Silans gegen ein geblocktes Mercaptosilan (vgl. Mischungen 3(V) und 4(V)), auch hier wird das Eisbremsen deutlich schlechter. Überraschenderweise führt die Kombination der beiden Maßnahmen, wie Mischung 6(E) zeigt, jedoch zu genau dem gegenteiligen Effekt, nämlich zu einem verbesserten Eisbremsen. Die anderen Reifeneigenschaften verbleiben auf hohem Niveau oder verbessern sich sogar, wie z. B. das Nassbremsen.

**Tabelle 2**

| **Bestandteile** | **Einheit** | **7(V)** | **8(V)** | **9(V)** | **10(V)** | **11(V)** | **12(E)** | **13(E)** |
|---|---|---|---|---|---|---|---|---|
| Naturkautschuk | phr | 20 | 20 | 10 | 10 | 15 | 15 | 15 |
| BR | phr | - | | - | - | 20 | 20 | 20 |
| S-SBR^{a} | phr | 80 | 80 | 90 | 90 | 65 | 65 | 65 |
| Ruß N121 | phr | - | | - | - | 8 | 8 | 8 |
| Ruß N339 | phr | 14 | 14 | 5 | 5 | - | - | - |
| Kieselsäure B^{c} | phr | - | 85 | - | - | - | 60 | 120 |
| Kieselsäure C^{d} | phr | 85 | - | 120 | 120 | 120 | 60 | - |
| Weichmacher | phr | 48 | 48 | 50 | 33 | 55 | 43 | 35 |
| Silan-Kupplungsagens^{e} | phr | 6 | 6 | 8,6 | - | - | - | - |
| gebl. Mercaptosilan^{f} | phr | - | - | - | 14,46 | 12,24 | 12,24 | 12,24 |
| Alterungsschutzmittel | phr | 4 | 4 | 6,9 | 6,9 | 7,1 | 7,1 | 7,1 |
| Zinkoxid | phr | 3 | 3 | 2 | 2 | 2 | 2 | 2 |
| Stearinsäure | phr | 2 | 2 | 1 | 1 | 1 | 1 | 1 |
| Beschleuniger | phr | 3,8 | 3,8 | 4,7 | 4,7 | 4,5 | 4,5 | 4,5 |
| Schwefel | phr | 2,1 | 2,1 | 2,1 | 2,1 | 0,6 | 0,6 | 0,6 |
| **Eigenschaften** | | | | | | | | |
| Shore A-Härte bei RT | ShoreA | 59 | 58 | 58 | 60 | 58 | 60 | 61 |
| Rückprallelast. bei RT | % | 38 | 46 | 24 | 30 | 28 | 35 | 40 |
| Rückprallelast. 70°C | % | 52 | 60 | 44 | 52 | 49 | 55 | 59 |
| E' | MPa | 7,5 | 6,3 | 5,7 | 5,6 | 7,0 | 7,6 | 7,5 |

| | | | | | | | | |
|---|---|---|---|---|---|---|---|---|
| ^{a)} lösungspolymerisiertes Styrol-Butadien-Copolymer ^{c)} Zeosil^{®} 1115 MP, CTAB 110 m²/g , BET 115 m²/g, Fa. Solvay ^{d)} Zeosil^{®} 1165 MP, CTAB 160 m²/g , BET 165 m²/g, Fa. Solvay ^{e)} S₂-Silan: TESPD ^{f)} geblocktes Mercaptosilan: 3-(Octanoylthio)-1-Propyl-Triethoxysilan, Fa. Momentive | | | | | | | | |

In Tabelle 2 erfolgte der Austausch der Kieselsäuren "phr-gleich". Aus der Tabelle 2 wird ersichtlich, dass nur bei gleichzeitigem Einsatz von einem Mercaptosilan mit einer Kieselsäure mit einer niedrigen spezifischen Oberfläche das Trockenhandling verbessert wird, wobei der dynamische Speichermodul E' als Maß für die dynamische Steifigkeit und dementsprechend als Maß für das Trockenhandling im Reifen dient. Ein höherer dynamischer Speichermodul E' korreliert mit einem verbesserten Trockenhandling. Die Einzelmaßnahmen würden auch hier den Fachmann das Gegenteil erwarten lassen, da sowohl beim Übergang von 7(V) zu 8(V) als auch von 9(V) zu 10(V) der dynamische Speichermodul E' kleiner wird.
Mischung 12(E) zeigt außerdem, dass durch den gleichzeitigen Einsatz von einer Kieselsäure mit hoher spezifischer Oberfläche (Zeosil^{®}1165 MP) und einer Kieselsäure mit niedriger spezifischer Oberfläche (Zeosil^{®}1115 MP) im Zusammenspiel mit einem Mercaptosilan das Trockenhandling weiter verbessert werden kann.

## Patentansprüche

1. Schwefelvernetzbare Kautschukmischung, enthaltend
- wenigstens einen Dienkautschuk,
- 30 bis 250 phr zumindest einer ersten Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g und
- 6,5 bis 12,5 phf zumindest eines geblockten und/oder ungeblockten Mercaptosilans.

2. Kautschukmischung nach Anspruch 1, **dadurch gekennzeichnet, dass** sie 8 bis 11 phf zumindest eines geblockten und/oder ungeblockten Mercaptosilans enthält.

3. Kautschukmischung nach zumindest einem der vorhergehenden Ansprüche, **dadurch gekennzeichnet, dass** das geblockte und/oder ungeblockte Mercaptosilan die allgemeine Summenformel I) aufweist:
I) (R⁴)₃Si-Z-S-R⁵,
wobei die Reste R⁴ innerhalb eines Moleküls gleich oder verschieden voneinander sein können und Alkoxy-Gruppen mit 1 bis 10 Kohlenstoffatomen sind, und
wobei R⁵ eine Acylgruppe mit 1 bis 20 Kohlenstoffatomen oder ein Wasserstoffatom ist, und
wobei Z eine Alkylgruppe mit 1 bis 10 Kohlenstoffatomen ist.

4. Kautschukmischung nach Anspruch 3, **dadurch gekennzeichnet, dass** es sich bei dem Mercaptosilan um das geblockte Mercaptosilan 3-Octanoylthio-1-propyltriethoxysilan handelt.

5. Kautschukmischung nach zumindest einem der vorhergehenden Ansprüche, **dadurch gekennzeichnet, dass** sie 60 bis 180 phr zumindest einer ersten Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g enthält.

6. Kautschukmischung nach zumindest einem der vorhergehenden Ansprüche, **dadurch gekennzeichnet, dass** die erste Kieselsäure eine CTAB-Oberfläche (gemäß ASTM D 3765) von 70 bis 120 m²/g und einer Stickstoff-Oberfläche (BET-Oberfläche) (gemäß DIN ISO 9277 und DIN 66132) von 80 bis 125 m²/g aufweist.

7. Kautschukmischung nach zumindest einem der vorhergehenden Ansprüche, **dadurch gekennzeichnet, dass** sie zumindest eine zweite Kieselsäure mit einer CTAB-Oberfläche (gemäß ASTM D 3765) von mehr als 130 m²/g und einer Stickstoff-Oberfläche (BET-Oberfläche) (gemäß DIN ISO 9277 und DIN 66132) von mehr als 140 m²/g enthält.

8. Kautschukmischung nach Anspruch 7, **dadurch gekennzeichnet, dass** sie 30 bis 125 phr der ersten Kieselsäure und 10 bis 125 phr der zweiten Kieselsäure enthält.

9. Fahrzeugluftreifen, der wenigstens ein Bauteil aufweist, welches zumindest zum Teil aus einer mit Schwefel vulkanisierten Kautschukmischung nach zumindest einem der Ansprüche 1 bis 8 besteht.

10. Fahrzeugluftreifen nach Anspruch 9, **dadurch gekennzeichnet, dass** es sich bei dem Bauteil zumindest um den Laufstreifen handelt.
